# EUROPEAN PATENT SPECIFICATION

(11) **EP 4 403 859 B1**
(45) Date of publication and mention of the grant of the patent: **22.04.2026**
(21) Application number: 22948297.1
(22) Date of filing: 28.06.2022
(51) Int. Cl.: F26B 3/04, F26B 13/12, F26B 13/16

(54) **DRYING APPARATUS, ELECTRODE PLATE MANUFACTURING DEVICE, AND ELECTRODE PLATE DRYING METHOD**
TROCKNUNGSVORRICHTUNG, VORRICHTUNG ZUR HERSTELLUNG VON FLACHELEKTRODEN UND ELEKTRODENTROCKNUNGSVERFAHREN
APPAREIL DE SÉCHAGE, DISPOSITIF DE FABRICATION DE PLAQUES D'ÉLECTRODES ET MÉTHODE DE SÉCHAGE DES PLAQUES D'ÉLECTRODES

(43) Date of publication of application: 24.07.2024
(73) Proprietor: Contemporary Amperex Technology (Hong Kong) Limited, Central, Central And Western District (HK)
(72) Inventor: LU, Lei, Ningde, Fujian 352100 (CN); YU, Linzhen, Ningde, Fujian 352100 (CN); WANG, Yalong, Ningde, Fujian 352100 (CN); HU, Changyuan, Ningde, Fujian 352100 (CN); WANG, Zheng, Ningde, Fujian 352100 (CN); DENG, Kaiming, Ningde, Fujian 352100 (CN); LI, Shisong, Ningde, Fujian 352100 (CN); ZHANG, Shengwu, Ningde, Fujian 352100 (CN)
(74) Representative: Gong, Jinping
(86) International application number: PCT/CN2022/101988
(87) International publication number: WO 2024/000177

(56) References cited:
- CN-A- 107 120 940
- CN-A- 107 120 942
- CN-A- 109 290 151
- CN-A- 109 675 756
- CN-A- 114 164 583
- CN-B- 104 148 263
- CN-U- 205 027 926
- CN-U- 206 875 895
- CN-U- 206 875 895
- CN-U- 212 611 670
- DE-A1- 102008 042 869
- JP-A- 2001 215 691
- US-A1- 2019 229 324
- US-B2- 8 353 113

## Description

### Technical Field

The present application relates to the field of battery production technology, and in particular, to a drying apparatus as specified in claim 1, an electrode plate manufacturing device as specified in claim 14, and an electrode plate drying method as specified in claim 15.

### Background Art

Energy conservation and emission reduction are the key to sustainable development of the automotive industry. Electric vehicles have become an important part of the sustainable development of the automotive industry due to their advantages in energy conservation and environmental protection. For the electric vehicles, the battery technology is an important factor related to their development.

In the development of battery technology, how to improve production efficiency of batteries is an urgent technical problem to be solved in the battery technology.

US 2019/229324 A1 discloses an electrode heating device, which directly heats and dries a surface of an electrode to remove moisture remaining on the electrode, and a manufacturing system for a secondary battery, which comprises the same.

CN 104 148 263 B discloses a dryer for electrode plates of rechargeable batteries and a control method thereof.

CN 206 875 895 U discloses a drying device with a high drying temperature and a high production speed.

### Summary

The present application provides a drying apparatus, an electrode plate manufacturing device, and an electrode plate drying method, which can improve production efficiency of batteries.

In a first aspect, the present application provides a drying apparatus for drying a material belt, including: a material belt turning mechanism, which is used for changing a travel direction of the material belt, and includes a first passing roller, a turning roller, and a second passing roller sequentially arranged in the travel direction of the material belt, where the turning roller is configured to move in a first direction relative to the first passing roller and the second passing roller to adjust a wrap angle of the material belt on the turning roller, where the first direction is perpendicular to an axial direction of the turning roller.

In the foregoing solution, the turning roller moves in the first direction relative to the first passing roller and the second passing roller, which can adjust the wrap angle of the material belt on the turning roller, that is, adjust the degree of deformation of the material belt due to turning (the smaller the wrap angle of the material belt on the turning roller, the weaker the deformation of the material belt; and the larger the wrap angle of the material belt on the turning roller, the stronger the deformation of the material belt). In this case, the position of the turning roller can be adjusted for material belts with different solid contents, so that the wrap angle of the material belt is appropriate, the risk of breakage of the material belts during turning due to excessive wrap angle and strong deformation is reduced, and the manufacturing efficiency of the material belts is improved. When the material belt is an electrode plate, the production efficiency of a battery can be improved by the drying apparatus.

According to some embodiments of the present application, the material belt turning mechanism is used for changing the travel direction of the material belt from a second direction to a third direction, where the second direction and the third direction are perpendicular to each other.

In the foregoing solution, the material belt can turn vertically under the action of the material belt turning mechanism, so that the internal space of the drying apparatus can be made full use and the drying efficiency can be improved.

According to some embodiments of the present application, an angle between the first direction and the second direction is 45°, and an angle between the first direction and the third direction is 45°.

In the foregoing solution, the first direction is between the second direction and the third direction, so that when the turning roller moves in the first direction, the displacement of the turning roller relative to the first passing roller is equal to the displacement of the turning roller relative to the second passing roller, to ensure that the material belt receives uniform force on the first passing roller, the turning roller, and the second passing roller, and to reduce the risk of breakage of the material belt due to uneven force.

According to some embodiments of the present application, the drying apparatus further comprises a box, and the material belt turning mechanism is located inside the box.

In the foregoing solution, the material belt turning mechanism is located inside the box, which can prevent external pollutants from interfering with the material belt turning mechanism and the material belt, to ensure safety of the material belt turning mechanism and the material belt.

According to some embodiments of the present application, the material belt turning mechanism further includes a driving member for driving the turning roller to move in the first direction.

In the foregoing solution, the driving member is configured to drive the turning roller to move in the first direction, and the wrap angle of the material belt on the turning roller can be adjusted to ensure that material belts with different solid contents have corresponding appropriate wrap angles, thereby reducing the risk of belt breakage due to excessive wrap angle.

According to some embodiments of the present application, the drying apparatus further includes: a track disposed inside the box and extending in the first direction; and a slider mounted on the track and connected to the turning roller; where the driving member is used for driving the turning roller to slide along the track.

In the foregoing solution, the turning roller can slide stably with the slider along the track, so that the turning roller can move smoothly in the first direction under the drive of the driving member, to adjust the wrap angle of the material belt.

According to some embodiments of the present application, a mounting portion is disposed at an end of the track; and the driving member includes an adjusting screw, the adjusting screw extends in the first direction, the adjusting screw passes through and is screwed to the mounting portion, and one end of the adjusting screw is connected to the slider.

In the foregoing solution, the adjusting screw passes through and is screwed to the mounting plate, that is, the slider can slide in the first direction by rotating the adjusting screw, so as to adjust the position of the turning roller in the first direction.

According to some embodiments of the present application, the turning roller includes a roller body and a shaft body, and the roller body is sleeved over the shaft body in a rotatable manner; and the slider is connected to the shaft body.

In the foregoing solution, the material belt passes through the roller body, and the roller body can rotate relative to the shaft body, so the material belt can travel smoothly. Meanwhile, because the roller body can rotate relative to the shaft body, when the slider moves in the first direction, the roller body can move in the first direction without being affected by the slider in a case of smooth travel of the material belt, to adjust the wrap angle of the material belt on the roller body.

According to some embodiments of the present application, two tracks and two sliders are provided, and the two tracks are arranged at an interval in an axial direction of the shaft body; and two axially opposite ends of the shaft body cooperate with the tracks through the sliders, respectively.

In the foregoing solution, the track and the slider are disposed in pairs, the two axial ends of the shaft body are connected to the corresponding sliders respectively to slide on the corresponding tracks, and the turning roller can slide stably in the first direction under the drive of the driving members.

According to some embodiments of the present application, the drying apparatus further includes a displacement sensor for detecting a position of the turning roller on the track.

In the foregoing solution, the current position of the turning roller on the track can be detected by the displacement sensor, so as to calculate the position of the turning roller relative to the first passing roller and the second passing roller, and to determine the current wrap angle of the material belt on the turning roller.

According to the first aspect, the turning roller is an adsorption roller configured to provide adsorption force for the material belt.

In the foregoing solution, the turning roller is an adsorption roller, which can adsorb the material belt onto the surface of the turning roller, so as to provide effective support for the material belt and reduce the risks of wrinkling and breakage of the material belt due to turning.

According to some embodiments of the present application, a surface of the adsorption roller is provided with a plurality of air hole, and the air holes are used for providing adsorption force.

In the foregoing solution, the plurality of air holes on the adsorption roller can uniformly provide adsorption force for the material belt, so that the material belt is uniformly adsorbed on the surface of the turning roller by force to effectively reduce the risk of breakage of the material belt due to turning.

According to some embodiments of the present application, a plurality of material belt turning mechanisms are provided to change the travel direction of the material belt multiple times.

In the foregoing solution, the plurality of material belt turning mechanisms enable the material belt to turn multiple times in the drying apparatus, so as to make full use of the internal space of the drying apparatus, fully dry the material belt, and improve the drying efficiency of the material belt.

According to some embodiments of the present application, the drying apparatus further includes a first drying portion and a second drying portion, where the first drying portion and the second drying portion are opposite to and spaced from each other to form a gap through which the material belt passes; and the first drying portion is used for drying one side of the material belt in a thickness direction, and the second drying portion is used for drying the other side of the material belt in the thickness direction.

In the foregoing solution, the first drying portion and the second drying portion are configured to dry two surfaces of the material belt in the thickness direction simultaneously, so that the material belt is fully dried and the drying efficiency of the material belt is improved.

According to some embodiments of the present application, the first drying portion and/or the second drying portion include an air nozzle; and the air nozzle is used for providing airflow.

In the foregoing solution, the first drying portion and/or the second drying portion include an air nozzle, that is, in some embodiments, the first drying portion and the second drying portion may include an air nozzle separately, the first drying portion provides airflow to one side of the material belt, and the second drying portion provides airflow to the other side of the material belt, to dry two sides of the material belt, so as to ensure the drying efficiency of the material belt. In other embodiments, the first drying portion may include an air nozzle, and the first drying portion provides airflow to the material belt to dry the material belt. In other embodiments, the second drying portion may include an air nozzle, and the second drying portion provides airflow to the material belt to dry the material belt.

In a second aspect, the present application further provides an electrode plate manufacturing device, including a coating apparatus for coating a surface of an electrode plate with slurry; and the drying apparatus provided in the first aspect, where in a travel direction of the electrode plate, the drying apparatus is provided downstream of the coating apparatus to dry the slurry on the electrode plate.

In a third aspect, the present application further provides an electrode plate drying method, including: obtaining a solid content of an electrode plate; and moving a turning roller in a drying apparatus in a first direction according to the solid content to adjust a wrap angle of the electrode plate on the turning roller, where the first direction is perpendicular to an axial direction of the turning roller, wherein the turning roller is an adsorption roller configured to provide adsorption force for the material belt.

Some of the additional aspects and advantages of the present application will be provided in the following description, and some will become apparent from the following description, or be learned by practice of the present application.

### Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic diagram of an oven apparatus in some embodiments of the present application;
FIG. 2 is a schematic diagram of the oven apparatus after positions of turning rollers are adjusted in some embodiments of the present application;
FIG. 3 is a schematic diagram of a material belt turning mechanism in some embodiments of the present application;
FIG. 4 is a schematic diagram of the material belt turning mechanism after the position of the turning roller is adjusted in some embodiments of the present application;
FIG. 5 is a schematic diagram of a partial structure of the material belt turning mechanism in some embodiments of the present application;
FIG. 6 is a side view of the structure shown in FIG. 5;
FIG. 7 is a schematic diagram of a drying apparatus in other embodiments of the present application; and
FIG. 8 is a schematic flowchart of an electrode plate drying method in some embodiments of the present application.

Reference numerals: 10 - material belt turning mechanism; 11 - first passing roller; 12 - turning roller; 120 - roller body; 1200 - air hole; 121 - shaft body; 13 - second passing roller; 14 - driving member; 20 - box; 20a - exhaust port; 20b - air return port; 20c - discharge port; 30 - track; 300 - mounting portion; 31 - slider; 32 - displacement sensor; 40 - first drying portion; 41 - second drying portion; 40a - air nozzle; 50 - travel roller; x - first direction; y - second direction; z - third direction.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover non-exclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. The phrase at various locations in the specification does not necessarily refer to the same embodiment, or an independent or alternative embodiment exclusive of another embodiment.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists, both A and B exist, and B exists. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two (inclusive) or more.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells. The box may prevent liquid or other foreign matters from affecting charging or discharging of the battery cells.

The core component of the battery that can implement repeated charging and discharging functions is an electrode assembly in the battery cell, where the electrode assembly includes electrode plates and a separator, and the electrode plates include a positive electrode plate and a negative electrode plate. The separator is usually disposed between the positive electrode plate and the negative electrode plate to insulate the positive electrode plate and the negative electrode plate from each other. A material of the separator may be PP (polypropylene), PE (polyethylene), or the like. The battery cell mainly relies on migration of metal ions between the positive electrode sheet and the negative electrode sheet to work. The electrode plate includes a current collector and an active material layer. The current collector has a coated area coated with the active material layer and an uncoated area not coated with the active material layer in a width direction of the electrode plate. The active material layer is of a structure constituted by an active material, and the active material layer may include the active material, a conductive agent, and a binder. The positive electrode active material may be lithium cobaltate, lithium iron phosphate, ternary lithium, lithium manganate, or the like. The negative electrode active material may be carbon, silicon, or the like. A tab is cut from the current collector not coated with the active material layer, and the tab implements charging and discharging of the electrode assembly. The current collector may be a metal foil, such as a copper foil or an aluminum foil.

A manufacturing process of the electrode plate includes a coating procedure and a drying procedure, where the coating procedure includes coating the current collector with stirred slurry (namely, slurry-like active material) uniformly to form a film layer, and the drying procedure includes drying the film layer, so that the wet film layer is dried into a dry film layer to form the active material layer. At present, a solid content of the electrode plate is different in different specifications of batteries. The solid content refers to a content of solid in the slurry coated on the current collector.

At present, in the drying procedure, in order to improve drying efficiency, a material belt turning mechanism is disposed in a drying apparatus to change a direction of the electrode plate, so as to make reasonable use of an internal space of the drying apparatus and fully dry the electrode plate. The material belt turning mechanism includes a first passing roller, a turning roller, and a second passing roller sequentially arranged in a travel direction of a material belt. A central angle corresponding to a portion, in contact with the turning roller, of the electrode plate is a wrap angle. The larger the wrap angle, the faster the electrode plate turns.

At present, from the development of the market situation, electric vehicles have become an important part of sustainable development of the automotive industry. The battery provides energy for running of a vehicle body and operation of various electrical components in the vehicle body. For the electric vehicles, the battery technology is an important factor related to their development. In the development of battery technology, how to improve production efficiency of batteries is an urgent technical problem to be solved.

As mentioned earlier, a material belt turning mechanism is disposed to change a travel direction of an electrode plate, which can improve drying efficiency of the electrode plate. However, when the material belt turning mechanism is used to change the travel direction of the electrode plate, the electrode plate is prone to belt breakage to affect production efficiency of the battery. The inventor found that the reason for belt breakage of the electrode plate is as follows:

The portion, in contact with the turning roller, of the electrode plate is a portion where the electrode plate is deformed to implement belt turning of the electrode plate. Correspondingly, the larger the wrap angle of the electrode plate on the turning roller, the stronger the deformation of the electrode plate. Different specifications of electrode plates are different in solid content. The higher the solid content, the faster the electrode plate is dried, and the weaker the deformation the electrode plate can withstand. However, different specifications of electrode plates are currently dried by the same drying apparatus, that is, wrap angles of different specifications of electrode plates on the turning roller are constant. Therefore, if the solid content of the current electrode plate is high, a risk of belt breakage occurs due to the large wrap angle on the turning roller.

In view of this, in order to reduce the risk of belt breakage of the electrode plate due to excessive wrap angle and improve the production efficiency of the battery, the inventor conducted in-depth research and designed a drying apparatus, including a material belt turning mechanism, where a position of a turning roller in the material belt turning mechanism is adjustable. The wrap angle of the electrode plate on the turning roller can be adjusted by adjusting the position of the turning roller.

In the foregoing solution, the position of the turning roller in the material belt turning mechanism is adjustable, so the position of the turning roller can be adaptively adjusted according to the different solid content of the electrode plate, to ensure that the turning deformation of the current electrode plate is within an acceptable range, reduce the risk of belt breakage of the electrode plate due to excessive deformation, ensure production capacity of the electrode plate, and improve the production efficiency of the battery accordingly.

The drying apparatus disclosed in the embodiments of the present application includes, but is not limited to, drying of electrode plates or material belts coated with slurry.

The drying apparatus may be a partial structure of an electrode plate manufacturing device, and the electrode plate manufacturing device may further include a coating apparatus, where the coating apparatus is used for coating a surface of an electrode plate with slurry, and the electrode plate coated with the slurry is dried by the drying apparatus.

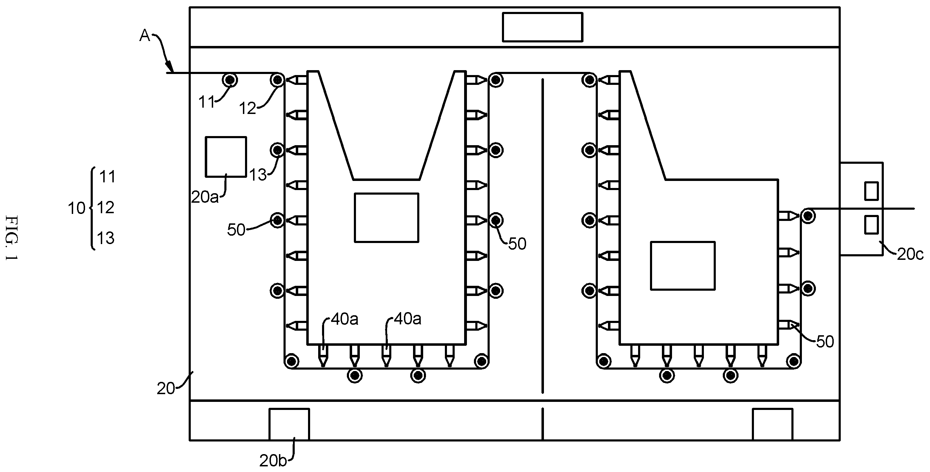

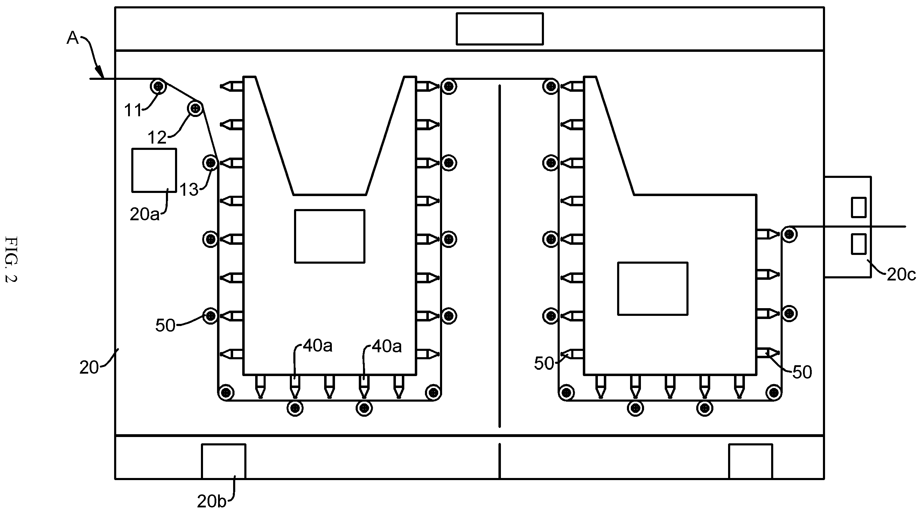

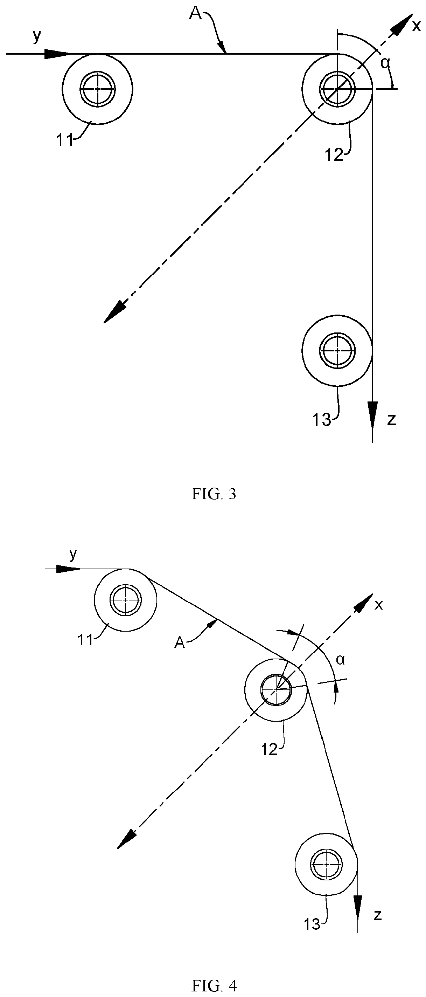

Referring to FIGs. 1 to 4 for some embodiments of the present application, FIG. 1 is a schematic diagram of an oven apparatus in some embodiments of the present application, FIG. 2 is a schematic diagram of the oven apparatus after positions of turning rollers 12 are adjusted in some embodiments of the present application, FIG. 3 is a schematic diagram of a material belt turning mechanism 10 in some embodiments of the present application, and FIG. 4 is a schematic diagram of the material belt turning mechanism 10 after the position of the turning roller 12 is adjusted in some embodiments of the present application. A material belt is marked with label A in the figures.

A drying apparatus for drying a material belt includes a material belt turning mechanism 10.

The material belt turning mechanism 10 is used for changing a travel direction of the material belt, and includes a first passing roller 11, a turning roller 12, and a second passing roller 13 sequentially arranged in the travel direction of the material belt. The turning roller 12 is configured to move in a first direction x relative to the first passing roller 11 and the second passing roller 13 to adjust a wrap angle of the material belt on the turning roller 12, where the first direction x is perpendicular to an axial direction of the turning roller 12.

The material belt may be of a belt structure coated with slurry on a surface, such as an electrode plate coated with slurry. The drying apparatus is used for drying the slurry on the surface of the material belt. The content of solid in the slurry is a solid content. The higher the solid content, the higher the content of solid in the slurry, the lower the solvent content in the slurry, the faster the slurry is dried under the same drying condition, and the weaker the deformation the slurry can withstand. The material belt with high solid content is prone to breakage when its deformation is strong.

The material belt turning mechanism 10 is a mechanism that can change the travel direction of the material belt. For example, the material belt travels in a second direction y before passing through the material belt turning mechanism 10, and travels in a third direction z after passing through the material belt turning mechanism 10, where the second direction y and the third direction z are not in the same direction.

As shown in FIG. 3 and FIG. 4, the material belt entering the material belt turning mechanism 10 first passes through the first passing roller 11, then through the turning roller 12, and finally through the second passing roller 13. The material belt travels in the first direction x to the second passing roller 13, and travels in the third direction z from the second passing roller 13 to leave the material belt turning mechanism 10 after being acted on by the turning roller 12. Under the action of the turning roller 12, the material belt is deformed to change its travel direction from the second direction y to the third direction z. A central angle corresponding to a portion, in contact with the turning roller 12, of the material belt is a wrap angle. The larger the wrap angle, the greater the deformation and faster the turning speed of the material belt under the action of the turning roller 12. Conversely, the smaller the wrap angle, the smaller the deformation and slower the turning speed of the material belt. In FIG. 3 and FIG. 4, the wrap angle is represented by "α".

As shown in FIG. 3 and FIG. 4, the turning roller 12 can move in the first direction x, thereby changing its position relative to the first passing roller 11 and the second passing roller 13, and then changing the wrap angle of the material belt on the turning roller 12. By comparing FIG. 3 and FIG. 4, the position of the turning roller 12 in FIG. 4 changes compared to the turning roller 12 in FIG. 3, and the wrap angle of the material belt in FIG. 4 is smaller than that in FIG. 3.

The first direction x is perpendicular to the axial direction of the turning roller 12, and the first direction x may be in any direction on a plane perpendicular to the axis of the turning roller 12, so that after the position of the turning roller 12 is adjusted, the wrap angle of the material belt can be changed accordingly.

In the foregoing solution, by changing the position of the turning roller 12, the wrap angle of the material belt on the turning roller 12 can be adjusted, that is, the degree of deformation of the material belt due to turning can be adjusted, to adjust the position of the turning roller 12 for material belts with different solid contents, so that the wrap angle of the material belt is appropriate, the risk of breakage of a material belt with high solid content during turning due to excessive wrap angle and strong deformation is reduced, and the manufacturing efficiency of the material belts is improved. When the material belt is an electrode plate, the production efficiency of a battery can be improved by the drying apparatus.

According to some embodiments of the present application, such as FIG. 3 and FIG. 4, the material belt turning mechanism 10 is used for changing the travel direction of the material belt from the second direction y to the third direction z, where the second direction y and the third direction z are perpendicular to each other.

With reference to FIG. 3 and FIG. 4, the third direction z and the second direction y are perpendicular to each other, indicating that the travel direction of the material belt changes at a right angle to make full use of an internal space of the drying apparatus. Correspondingly, a maximum wrap angle of the material belt on the turning roller 12 is 90°. In some electrode plates with high solid content, if their wrap angles are 90°, there is a high risk of belt breakage. In this case, when a material belt with high solid content is dried, the position of the turning roller 12 can be adjusted to ensure that the wrap angle of the material belt on the turning roller 12 is at an appropriate value, so as to reduce the risk of belt breakage while ensuring the turning speed. The "appropriate value" indicates that the wrap angle of the material belt on the turning roller 12 may be 45°-90°, such as 45°, 50°, 55°, 60°, 65°, 70°, 75°, 80°, 85°, or 90°.

In the foregoing solution, the material belt can turn vertically under the action of the material belt turning mechanism 10, so that the internal space of the drying apparatus can be made full use and the drying efficiency can be improved. Meanwhile, the adjustable turning roller 12 can adapt to material belts with different solid contents, so as to reduce the risk of breakage of the material belts.

According to some embodiments of the present application, with reference to FIG. 3 and FIG. 4, an angle between the first direction x and the second direction y is 45°, and an angle between the first direction x and the third direction z is 45°.

The first direction x is between the second direction y and the third direction z, and the angle between the first direction x and the second direction y is equal to the angle between the first direction x and the third direction z.

In the foregoing solution, the first direction x is between the second direction y and the third direction z, so that when the turning roller 12 moves in the first direction x, the displacement of the turning roller 12 relative to the first passing roller 11 is equal to the displacement of the turning roller 12 relative to the second passing roller 13, to ensure that the material belt receives uniform force on the first passing roller 11, the turning roller 12, and the second passing roller 13, and to reduce the risk of breakage of the material belt due to uneven force.

In other embodiments, the first direction x may alternatively be in other directions, for example, the first direction x may be parallel to the second direction y; or the first direction x may be parallel to the third direction z; or the first direction x may be between the second direction y and the third direction z, and the angle between the first direction x and the second direction y is not equal to the angle between the first direction x and the third direction z.

According to some embodiments of the present application, as shown in FIG. 1 and FIG. 2, the drying apparatus further includes a box 20, and the material belt turning mechanism 10 is located inside the box 20.

The material belt turning mechanism 10 is located inside the box 20 and protected by the box 20. The interior of the box 20 can effectively collect heat, effectively dry the material belt, and also protect the material belt. The interior of the box 20 may further include other structures, such as a structure that can dry the material belt, and a roller structure that provides support for travel of the material belt. The material belt enters from an inlet of the box 20, travels under the support of the roller structure, and turns under the action of the material belt turning mechanism 10. The material belt is dried by a drying structure in the box 20 during travel and finally discharged from an outlet of the box 20 to complete drying.

In the foregoing solution, the material belt turning mechanism 10 is located inside the box 20, which can prevent external pollutants from interfering with the material belt turning mechanism 10 and the material belt, to ensure safety of the material belt turning mechanism 10 and the material belt.

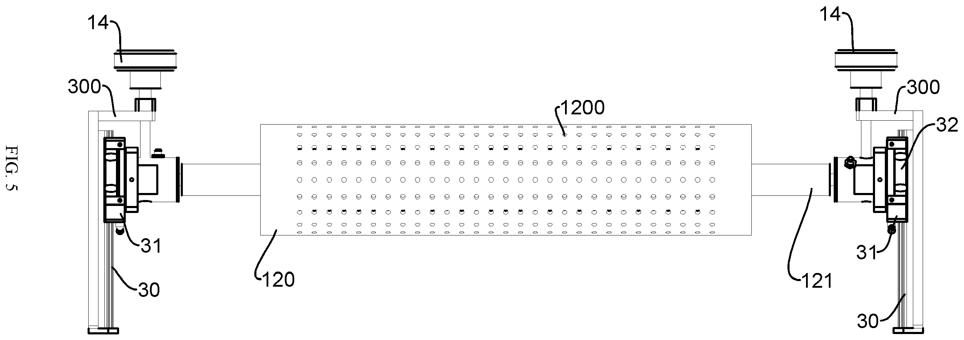

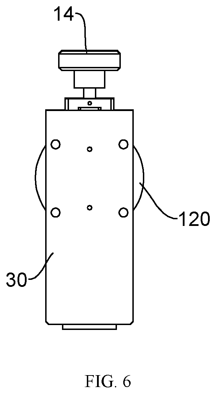

According to some embodiments of the present application, referring to FIG. 5 and FIG. 6, FIG. 5 is a schematic diagram of a partial structure of the material belt turning mechanism 10 in some embodiments of the present application, and FIG. 6 is a side view of the structure shown in FIG. 5. The material belt turning mechanism 10 further includes a driving member 14. The driving member 14 is used for driving the turning roller 12 to move in the first direction x.

The driving member 14 is a member that can drive the turning roller 12 to move in the first direction x, and can provide power that enables the turning roller 12 to move. In some embodiments, the driving member 14 may include, but is not limited to, a single-axis manipulator, a linear push rod, a linear motor, and the like that can output linear motion to drive the turning roller 12 to move back and forth in the first direction x.

In the foregoing solution, the driving member 14 is configured to drive the turning roller 12 to move in the first direction x, and the wrap angle of the material belt on the turning roller 12 can be adjusted to ensure that material belts with different solid contents have corresponding appropriate wrap angles, thereby reducing the risk of belt breakage due to excessive wrap angle.

According to some embodiments of the present application, as shown in FIG. 5, the drying apparatus further includes a track 30 and a slider 31. The track 30 is disposed inside the box 20 and extends in the first direction x. The slider 31 is mounted on the track 30 and connected to the turning roller 12. The driving member 14 is used for driving the turning roller 12 to slide along the track 30.

The track 30 is mounted on an inner wall of the box 20 and extends in the first direction x. The slider 31 is mounted on the track 30 and can slide along the track 30, namely, in the first direction x. The turning roller 12 is connected to the slider 31 to slide with the slider 31 in the first direction x. When the driving member 14 provides driving force to the turning roller 12, the track 30 and the slider 31 enable the turning roller 12 to slide accurately and stably in the first direction x.

In the foregoing solution, the turning roller 12 can slide stably with the slider 31 along the track 30, so that the turning roller 12 can move smoothly in the first direction x under the drive of the driving member 14, to adjust the wrap angle of the material belt.

According to some embodiments of the present application, with reference to FIG. 5, a mounting portion 300 is provided at an end of the track 30. The driving member 14 includes an adjusting screw, the adjusting screw extends in the first direction x, the adjusting screw passes through and is screwed to the mounting portion 300, and one end of the adjusting screw is connected to the slider 31.

The mounting portion 300 is plate-like, and its extension direction is perpendicular to the first direction x, that is, the mounting portion 300 protrudes from the track 30. A screw hole is formed on a surface of the mounting portion 300 to mount the adjusting screw. The adjusting screw extends in the first direction x, and its surface has an external thread for fitting with the screw hole on the mounting portion 300. The end of the adjusting screw is connected to the slider 31.

In the foregoing solution, the adjusting screw passes through and is screwed to the mounting plate, that is, the slider 31 can slide in the first direction x by rotating the adjusting screw, so as to adjust the position of the turning roller 12 in the first direction x.

In some embodiments, the track 30 may be fixed to the inner wall of the box 20 by a support, and the mounting portion 300 may be formed at an end of the support.

Optionally, in other embodiments, the adjusting screw may be canceled, and the turning roller 12 may be driven to move in the first direction x by other driving devices, such as a linear motor or a linear push rod.

According to some embodiments of the present application, as shown in FIG. 5, the turning roller 12 includes a roller body 120 and a shaft body 121, and the roller body 120 is sleeved over the shaft body 121 in a rotatable manner. The slider 31 is connected to the shaft body 121.

When the material belt travels on the turning roller 12, a surface of the material belt is in contact with a peripheral surface of the roller body 120. The shaft body 121 is a component that passes through the interior of the roller body 120 and can rotate relative to the roller body 120. The shaft body 121 and the roller body 120 are coaxial, and their axial directions are perpendicular to the first direction x. The slider 31 is connected to the shaft body 121, that is, when the slider 31 slides in the first direction x, the roller body 120 can rotate relative to the shaft body 121, without being affected by the movement of the shaft body 121 in the first direction x.

With reference to FIG. 5, in some embodiments, in order to ensure that the material belt passes through the turning roller 12 smoothly, a bearing may be disposed between the shaft body 121 and the slider 31, so that the shaft body 121 can rotate in the axial direction of the shaft body 121 relative to the slider 31.

In the foregoing solution, the material belt passes through the roller body 120, and the roller body 120 can rotate relative to the shaft body 121, so the material belt can travel smoothly. Meanwhile, because the roller body 120 can rotate relative to the shaft body 121, when the slider 31 moves in the first direction x, the roller body 120 can move in the first direction x without being affected by the slider in a case of smooth travel of the material belt, to adjust the wrap angle of the material belt on the roller body 120.

According to some embodiments of the present application, as shown in FIG. 5, two tracks 30 and two sliders 31 are provided, and the two tracks 30 are arranged at an interval in an axial direction of the shaft body 121; and two axially opposite ends of the shaft body 121 cooperate with the tracks 30 through the sliders 31, respectively.

The track 30 and the slider 31 are disposed in pairs, and each pair of track 30 and slider 31 corresponds to the ends of the shaft body 121. In the axial direction of the turning roller 12, the tracks 30 and the sliders 31 are disposed on the two opposite sides of the turning roller 12, respectively. The slider 31 on each side is mounted on the corresponding track 30, and the slider 31 is connected to the end of the shaft body 121 on the same side.

Because the track 30 and the slider 31 are disposed in pairs, the turning roller 12 can move smoothly in the first direction x, which reduces the risk of belt wrinkles caused by tilting of the turning roller 12.

In some embodiments, there may be two driving members 14 corresponding to the sliders 31 and acting on the corresponding sliders 31 respectively, so as to drive the turning roller 12 to move smoothly in the first direction x.

In the foregoing solution, the track 30 and the slider 31 are disposed in pairs, the two axial ends of the shaft body 121 are connected to the corresponding sliders 31 respectively to slide on the corresponding tracks 30, and the turning roller 12 can slide stably in the first direction x under the drive of the driving members.

According to some embodiments of the present application, the drying apparatus further includes a displacement sensor 32, and the displacement sensor 32 is used for detecting a position of the turning roller 12 on the track 30.

In some embodiments, the displacement sensor 32 may be a potentiometer type displacement sensor. The position of the turning roller 12 on the track 30 can be detected by the displacement sensor 32. The displacement sensor 32 is a conventional sensing instrument, and those skilled in the art are aware of its operating principle, so this embodiment will not elaborate further.

In the foregoing solution, the current position of the turning roller 12 on the track 30 can be detected by the displacement sensor 32, so as to calculate the position of the turning roller 12 relative to the first passing roller 11 and the second passing roller 13, and to determine the current wrap angle of the material belt on the turning roller 12.

According to some embodiments of the present application, the turning roller 12 is an adsorption roller configured to provide adsorption force for the material belt.

The adsorption roller may be a vacuum adsorption roller, which can provide adsorption force for the material belt passing through its surface, so that the material belt can tightly adhere to the surface of the adsorption roller to reduce risks of wrinkling and breakage of the material belt. The adsorption roller is a conventional roller, and those skilled in the art can clearly learn its specific structure and working principle, so this embodiment will not elaborate further.

In the foregoing solution, the turning roller 12 is an adsorption roller, which can adsorb the material belt onto the surface of the turning roller 12, so as to provide effective support for the material belt and reduce the risks of wrinkling and breakage of the material belt due to turning.

According to some embodiments of the present application, the surface of the adsorption roller is provided with a plurality of air holes (gas holes) 1200, and the air holes 1200 are used for providing adsorption force.

In some embodiments, a plurality of air holes 1200 are formed on the surface of the roller body 120 of the adsorption roller, the air holes 1200 are uniformly spaced, and each air hole 1200 provides adsorption force, so that the material belt can be uniformly adsorbed on the surface of the roller body 120 by force. The air holes 1200 are, but not limited to, circular, elliptical, square, triangular, or the like.

In the foregoing solution, the plurality of air holes 1200 on the adsorption roller can uniformly provide adsorption force for the material belt, so that the material belt is uniformly adsorbed on the surface of the turning roller 12 by force to effectively reduce the risk of breakage of the material belt due to turning.

According to some embodiments of the present application, with reference to FIG. 1, a plurality of material belt turning mechanisms 10 are provided to change the travel direction of the material belt multiple times.

With reference to FIG. 1, in some embodiments, a quantity of the material belt turning mechanisms 10 is 7, so the material belt turns 7 times in the drying apparatus. As shown in FIG. 1, the travel path of the material belt can be regarded as a "concave" shape, which ensures that the material belt makes full use of the internal space of the drying apparatus, so that the material belt can be fully dried.

In the foregoing solution, the plurality of material belt turning mechanisms 10 enable the material belt to turn multiple times in the drying apparatus, so as to make full use of the internal space of the drying apparatus, fully dry the material belt, and improve the drying efficiency of the material belt.

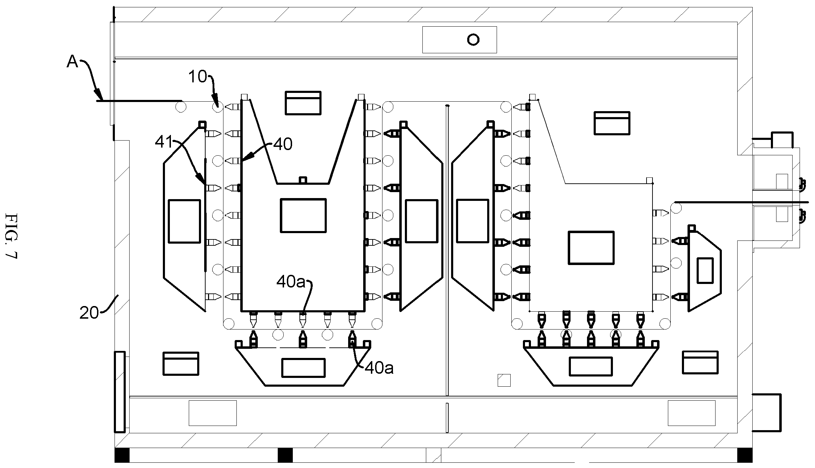

According to other embodiments of the present application, referring to FIG. 7, FIG. 7 is a schematic diagram of a drying apparatus in other embodiments of the present application. The drying apparatus further includes a first drying portion 40 and a second drying portion 41, where the first drying portion 40 and the second drying portion 41 are opposite to and spaced from each other to form a gap through which the material belt passes, the first drying portion 40 is used for drying one side of the material belt in a thickness direction, and the second drying portion 41 is used for drying the other side of the material belt in the thickness direction.

In some embodiments, two surfaces of the material belt in the thickness direction are coated with slurry. In order to dry the slurry on the two surfaces simultaneously, the first drying portion 40 and the second drying portion 41 are provided. The first drying portion 40 can dry the slurry on one surface, and the second drying portion 41 can dry the slurry on the other surface.

In some embodiments, a plurality of first drying portions 40 and a plurality of second drying portions 41 are provided, the plurality of first drying portions 40 are spaced in the travel direction of the material belt, and the plurality of second drying portions 41 are spaced in the travel direction of the material belt.

In the foregoing solution, the first drying portion 40 and the second drying portion 41 are configured to dry the two surfaces of the material belt in the thickness direction simultaneously, so that the material belt is fully dried and the drying efficiency of the material belt is improved.

According to other embodiments of the present application, the first drying portion 40 and/or the second drying portion 41 include an air nozzle (gas nozzle) 40a. The air nozzle 40a is used for providing airflow (gas flow).

The air nozzle 40a is a component that can provide airflow, which dries the slurry on the surface of the material belt to dry the material belt. The airflow may be hot airflow. Drying the material belt with the air nozzle 40a is a conventional technical means. Those skilled in the art can clearly learn the structure and operating principle of the air nozzle 40a, so the present application will not elaborate.

"The first drying portion 40 and/or the second drying portion 41 include an air nozzle 40a" indicates that the first drying portion 40 includes an air nozzle 40a; the second drying portion 41 includes an air nozzle 40a; or the first drying portion 40 and the second drying portion 41 each include an air nozzle 40a.

In the foregoing solution, the first drying portion 40 and/or the second drying portion 41 include an air nozzle 40a, that is, in some embodiments, the first drying portion 40 and the second drying portion 41 may include an air nozzle 40a separately, the first drying portion 40 provides airflow to one side of the material belt, and the second drying portion 41 provides airflow to the other side of the material belt, to dry two sides of the material belt, so as to ensure the drying efficiency of the material belt. In other embodiments, the first drying portion 40 may include an air nozzle 40a, and the first drying portion 40 provides airflow to the material belt to dry the material belt. In other embodiments, the second drying portion 41 may include an air nozzle 40a, and the second drying portion 41 provides airflow to the material belt to dry the material belt.

In other embodiments, the first drying portion 40 and/or the second drying portion 41 may further include other devices capable of drying the material belt, such as a heating plate capable of radiating heat to the material belt.

According to other embodiments of the present application, the present application further provides an electrode plate manufacturing device, including a coating apparatus and the drying apparatus provided above, where the coating apparatus is used for coating a surface of an electrode plate with slurry. In a travel direction of the electrode plate, the drying apparatus is provided downstream of the coating apparatus to dry the slurry on the electrode plate.

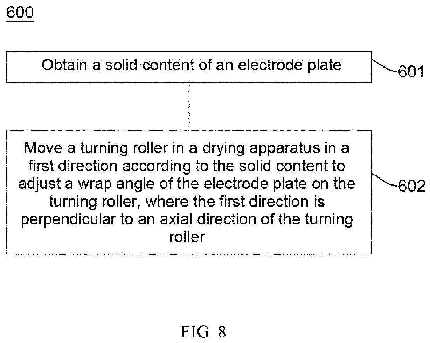

According to other embodiments of the present application, referring to FIG. 8, FIG. 8 is a schematic flowchart of an electrode plate drying method in some embodiments of the present application. The present application further provides an electrode plate drying method 600, including:
601: Obtain a solid content of an electrode plate; and
602: Move a turning roller 12 in a drying apparatus in a first direction x according to the solid content to adjust a wrap angle of the electrode plate on the turning roller 12, where the first direction x is perpendicular to an axial direction of the turning roller 12.

In some embodiments, the turning roller 12 may refer to the turning roller 12 in the material belt turning mechanism 10 provided above.

In some embodiments, when an anode electrode plate with a solid content of 65% is dried, the corresponding wrap angle can be adjusted to 60°-90°. When an anode electrode plate with a solid content of 70% is dried, the corresponding wrap angle can be adjusted to 45°-60°. When a cathode electrode plate with a solid content of 70% is dried, the corresponding wrap angle can be adjusted to 70°-90°. When a cathode electrode plate with a solid content of 75% is dried, the corresponding wrap angle can be adjusted to 55°-70°. When a cathode electrode plate with a solid content of 80% is dried, the corresponding wrap angle can be adjusted to 45°-55°.

According to some embodiments of the present application, with reference to FIGs. 1-6, the present application further provides a drying apparatus, which includes a box 20, material belt turning mechanisms 10, air nozzles 40a, and a plurality of travel rollers 50. The box 20 may be provided with an exhaust port 20a, an air return port 20b, a feed port, and a discharge port 20c (where the exhaust port 20a, the air return port 20b, the feed port, and the discharge port 20c are conventional structures in the drying field, and those skilled in the art are well aware of their specific structures and working principles, so this embodiment will not elaborate further). The plurality of material belt turning mechanisms 10 and the plurality of travel rollers 50 are disposed in the box 20 for travel of the electrode plate. The electrode plate enters the box 20 from the discharge port. When the electrode plate passes through a material belt turning mechanism 10, its travel direction changes to achieve vertical turning (as shown in FIG. 3, the material belt turning mechanism 10 is used for changing the travel direction of the electrode plate from the second direction y to the third direction z, where the second direction y and the third direction z are perpendicular to each other). The material belt turning mechanism 10 includes a first passing roller 11, a turning roller 12, and a second passing roller 13 sequentially arranged in the travel direction of the material belt. The portion of the electrode plate that undergoes maximum deformation due to turning is a portion in contact with the turning roller 12. The turning roller 12 is an adsorption roller that can adsorb the electrode plate onto a surface of the turning roller 12. The electrode plate can turn multiple times through the plurality of material belt turning mechanisms 10, so that the travel path of the electrode plate is in a "concave" shape. Accordingly, the internal space of the box 20 is made full use, and the electrode plate ultimately gets out from the discharge port. The plurality of air nozzles 40a are spaced in the travel direction of the electrode plate to provide hot airflow for the electrode plate to dry the electrode plate.

To adapt to electrode plates with different solid contents and reduce a risk of breakage of the electrode plates, the turning roller 12 is configured to move in the first direction x relative to the first passing roller 11 and the second passing roller 13, so as to adjust the wrap angle of the electrode plate on the turning roller 12. With reference to FIG. 3, the angle between the first direction x and the second direction y is 45°. The angle between the first direction x and the third direction z is 45°. By adjusting the position of the turning roller 12 in the first direction x, the wrap angle of the electrode plate on the turning roller 12 can be 45°-90°.

With reference to FIG. 5, the drying apparatus further includes a track 30 and a slider 31 in pairs, the slider 31 is mounted on the track 30, and the track 30 extends in the first direction x. Two ends of a shaft body 121 of the turning roller are connected to the sliders 31 respectively, so that the turning roller can slide stably in the first direction x. An adjusting screw is disposed on the track 30, the adjusting screw is threaded to a mounting portion 300 on the track 30, and an end of the adjusting screw is connected to the turning roller. The turning roller can slide in the first direction x by rotating the adjusting screw. A displacement sensor 32 is further disposed on the track 30, and the displacement sensor 32 can detect the position of the turning roller 12 on the track 30. The position of the turning roller 12 relative to the first passing roller 11 and the second passing roller 13 can be obtained by calculation, and then the wrap angle of the electrode plate on the turning roller 12 can be obtained.

## Claims

1. A drying apparatus for drying a material belt, comprising:
at least one material belt turning mechanism (10), each configured for changing a travel direction of the material belt, and comprising a first passing roller (11), a turning roller (12), and a second passing roller (13) sequentially arranged in the travel direction of the material belt,
**characterized in that** the turning roller (12) is configured to move in a first direction (x) relative to the first passing roller (11) and the second passing roller (13) to adjust a wrap angle of the material belt on the turning roller (12), wherein the first direction (x) is perpendicular to an axial direction of the turning roller (12),
wherein the turning roller (12) is an adsorption roller configured to provide adsorption force for the material belt.

2. The drying apparatus according to claim 1, wherein the at least one material belt turning mechanism (10) is each configured for changing the travel direction of the material belt from a second direction (y) to a third direction (z), wherein the second direction (y) and the third direction (z) are perpendicular to each other.

3. The drying apparatus according to claim 2, wherein an angle between the first direction (x) and the second direction (y) is 45°, and an angle between the first direction (x) and the third direction (y) is 45°.

4. The drying apparatus according to claim 1, wherein the drying apparatus further comprises:
a box (20), wherein the at least one material belt turning mechanism (10) is located inside the box (20).

5. The drying apparatus according to claim 4, wherein the at least one material belt turning mechanism (10) each further comprises:
a driving member (14) configured for driving the turning roller (12) to move in the first direction (x).

6. The drying apparatus according to claim 5, wherein the drying apparatus further comprises:
at least one track (30) disposed inside the box (20) and extending in the first direction (x); and
at least one slider (31) mounted on the at least one track (30) and connected to the turning roller (12),
wherein the driving member (14) is used for driving the turning roller (12) to slide along the at least one track (30).

7. The drying apparatus according to claim 6, wherein a mounting portion (300) is disposed at an end of the at least one track (30); and
the driving member (14) comprises an adjusting screw, the adjusting screw extends in the first direction (x), the adjusting screw passes through and is screwed to the mounting portion (300), and one end of the adjusting screw is connected to the at least one slider (31).

8. The drying apparatus according to claim 6, wherein the turning roller (12) comprises a roller body (120) and a shaft body (121), and the roller body (120) is sleeved over the shaft body (121) in a rotatable manner; and
the at least one slider (31) is connected to the shaft body (121),
preferably, two tracks (30) and two sliders (31) are provided, and the two tracks (30) are arranged at an interval in an axial direction of the shaft body (121); and
two axially opposite ends of the shaft body (121) cooperate with the tracks (30) through the sliders (31), respectively.

9. The drying apparatus according to claim 6, wherein the drying apparatus further comprises a displacement sensor (32) configured for detecting a position of the turning roller (12) on the track (30).

10. The drying apparatus according to claim 1, wherein a surface of the adsorption roller is provided with a plurality of air holes (1200), and the air holes (1200) are configured for providing adsorption force.

11. The drying apparatus according to claim 1, wherein a plurality of material belt turning mechanisms (10) are provided to change the travel direction of the material belt multiple times.

12. The drying apparatus according to any one of claims 1 to 11, wherein the drying apparatus further comprises at least one first drying portion (40) and at least one second drying portion, wherein the at least one first drying portion (40) and the at least one second drying portion (41) are opposite to and spaced from each other to form a gap through which the material belt passes; and
the at least one first drying portion (40) is configured for drying one side of the material belt in a thickness direction, and the at least one second drying portion (41) is configured for drying the other side of the material belt in the thickness direction.

13. The drying apparatus according to claim 12, wherein the at least one first drying portion (40) and/or the at least one second drying portion (41) each comprise an air nozzle (40a); and
the air nozzle (40a) is configured for providing airflow.

14. An electrode plate manufacturing device, comprising:
a coating apparatus configured for coating a surface of an electrode plate with a slurry; and
the drying apparatus according to any one of claims 1 to13, wherein in a travel direction of the electrode plate, the drying apparatus is provided downstream of the coating apparatus to dry the slurry on the electrode plate.

15. An electrode plate drying method, comprising:
obtaining a solid content of an electrode plate; and
moving a turning roller (12) in the drying apparatus according to claim 1 in a first direction (x) according to the solid content, to adjust a wrap angle of the electrode plate on the turning roller (12), wherein the first direction (x) is perpendicular to an axial direction of the turning roller (12),
wherein the turning roller (12) is an adsorption roller configured to provide adsorption force for electrode plate.

## Patentansprüche

1. Trocknungsvorrichtung zum Trocknen eines Materialbands, umfassend:
mindestens einen Materialbandwendemechanismus (10), der jeweils zum Ändern einer Laufrichtung des Materialbands ausgelegt ist und eine erste Durchlaufrolle (11), eine Wenderolle (12) und eine zweite Durchlaufrolle (13) umfasst, die in der Laufrichtung des Materialbands nacheinander angeordnet sind,
**dadurch gekennzeichnet, dass**
die Wenderolle (12) dazu ausgelegt ist, sich in eine erste Richtung (x) relativ zu der ersten Durchlaufrolle (11) und der zweiten Durchlaufrolle (13) zu bewegen, um einen Umschlingungswinkel des Materialbands auf der Wenderolle (12) einzustellen, wobei die erste Richtung (x) senkrecht zu einer axialen Richtung der Wenderolle (12) ist,
wobei die Wenderolle (12) eine Adsorptionsrolle ist, die dazu ausgelegt ist, eine Adsorptionskraft für das Materialband vorzusehen.

2. Trocknungsvorrichtung nach Anspruch 1, wobei der mindestens eine Materialbandwendemechanismus (10) jeweils zum Ändern der Laufrichtung des Materialbands von einer zweiten Richtung (y) in eine dritte Richtung (z) ausgelegt ist, wobei die zweite Richtung (y) und die dritte Richtung (z) senkrecht zueinander sind.

3. Trocknungsvorrichtung nach Anspruch 2, wobei ein Winkel zwischen der ersten Richtung (x) und der zweiten Richtung (y) 45° beträgt und ein Winkel zwischen der ersten Richtung (x) und der dritten Richtung (y) 45° beträgt.

4. Trocknungsvorrichtung nach Anspruch 1, wobei die Trocknungsvorrichtung ferner Folgendes umfasst:
einen Kasten (20), wobei sich der mindestens eine Materialbandwendemechanismus (10) innerhalb des Kastens (20) befindet.

5. Trocknungsvorrichtung nach Anspruch 4, wobei der mindestens eine Materialbandwendemechanismus (10) jeweils ferner Folgendes umfasst:
ein Antriebselement (14), das zum Antreiben der Wenderolle (12), sich in die erste Richtung (x) zu bewegen, ausgelegt ist.

6. Trocknungsvorrichtung nach Anspruch 5, wobei die Trocknungsvorrichtung ferner Folgendes umfasst:
mindestens eine Schiene (30), die innerhalb des Kastens (20) angeordnet ist und sich in die erste Richtung (x) erstreckt; und
mindestens einen Schieber (31), der auf der mindestens einen Schiene (30) montiert und mit der Wenderolle (12) verbunden ist,
wobei das Antriebselement (14) zum Antreiben der Wenderolle (12), sich entlang der mindestens einen Schiene (30) zu verschieben, verwendet wird.

7. Trocknungsvorrichtung nach Anspruch 6, wobei ein Montageabschnitt (300) an einem Ende der mindestens einen Schiene (30) angeordnet ist und
das Antriebselement (14) eine Stellschraube umfasst, wobei sich die Stellschraube in die erste Richtung (x) erstreckt, wobei die Stellschraube durch den Montageabschnitt (300) verläuft und damit verschraubt ist und ein Ende der Stellschraube mit dem mindestens einen Schieber (31) verbunden ist.

8. Trocknungsvorrichtung nach Anspruch 6, wobei die Wenderolle (12) einen Rollenkörper (120) und einen Wellenkörper (121) umfasst und der Rollenkörper (120) den Wellenkörper (121) drehbar ummantelt und
der mindestens eine Schieber (31) mit dem Wellenkörper (121) verbunden ist,
wobei vorzugsweise zwei Schienen (30) und zwei Schieber (31) vorgesehen sind und die zwei Schienen (30) in einem Abstand in axialer Richtung des Wellenkörpers (121) angeordnet sind und wobei zwei axial gegenüberliegende Enden des Wellenkörpers (121) durch die Schieber (31) mit den Schienen (30) zusammenwirken.

9. Trocknungsvorrichtung nach Anspruch 6, wobei die Trocknungsvorrichtung ferner einen Verlagerungssensor (32) umfasst, der dazu ausgelegt ist, die Position der Wenderolle (12) auf der Schiene (30) zu erfassen.

10. Trocknungsvorrichtung nach Anspruch 1, wobei eine Fläche der Adsorptionsrolle mit mehreren Luftlöchern (1200) versehen ist und die Luftlöcher (1200) dazu ausgelegt sind, eine Adsorptionskraft vorzusehen.

11. Trocknungsvorrichtung nach Anspruch 1, wobei mehrere Materialbandwendemechanismen (10) vorgesehen sind, um die Laufrichtung des Materialbands mehrfach zu ändern.

12. Trocknungsvorrichtung nach einem der Ansprüche 1 bis 11, wobei die Trocknungsvorrichtung ferner mindestens einen ersten Trocknungsabschnitt (40) und mindestens einen zweiten Trocknungsabschnitt umfasst, wobei der mindestens eine erste Trocknungsabschnitt (40) und der mindestens eine zweite Trocknungsabschnitt (41) einander gegenüberliegen und voneinander beabstandet sind, um einen Spalt zu bilden, durch den das Materialband verläuft; und wobei der mindestens eine erste Trocknungsabschnitt (40) dazu ausgelegt ist, eine Seite des Materialbands in einer Dickenrichtung zu trocknen, und der mindestens eine zweite Trocknungsabschnitt (41) dazu ausgelegt ist, die andere Seite des Materialbands in der Dickenrichtung zu trocknen.

13. Trocknungsvorrichtung nach Anspruch 12, wobei der mindestens eine erste Trocknungsabschnitt (40) und/oder der mindestens eine zweite Trocknungsabschnitt (41) jeweils eine Luftdüse (40a) umfassen und
die Luftdüse (40a) zum Vorsehen eines Luftstroms ausgelegt ist.

14. Elektrodenplattenherstellungseinrichtung, die Folgendes umfasst:
eine Beschichtungsvorrichtung, die dazu ausgelegt ist, eine Fläche einer Elektrodenplatte mit einer Aufschlämmung zu beschichten; und
die Trocknungsvorrichtung nach einem der Ansprüche 1 bis 13, wobei die Trocknungsvorrichtung in einer Laufrichtung der Elektrodenplatte der Beschichtungsvorrichtung nachgelagert vorgesehen ist, um die Aufschlämmung auf der Elektrodenplatte zu trocknen.

15. Elektrodenplattenherstellungseinrichtung, Folgendes umfassend:
Erhalten eines Feststoffgehalts einer Elektrodenplatte und
Bewegen einer Wenderolle (12) in der Trocknungsvorrichtung nach Anspruch 1 in eine erste Richtung (x) gemäß dem Feststoffgehalt, um einen Umschlingungswinkel der Elektrodenplatte auf der Wenderolle (12) einzustellen, wobei die erste Richtung (x) senkrecht zu einer axialen Richtung der Wenderolle (12) ist,
wobei die Wenderolle (12) eine Adsorptionsrolle ist, die dazu ausgelegt ist, eine Adsorptionskraft für die Elektrodenplatte vorzusehen.

## Revendications

1. Appareil de séchage destiné à sécher une bande de matériau, comprenant :
au moins un mécanisme d'orientation de bande de matériau (10), chacun étant conçu pour changer une direction de déplacement de la bande de matériau, et comprenant un premier rouleau de passage (11), un rouleau d'orientation (12) et un second rouleau de passage (13) disposés séquentiellement dans la direction de déplacement de la bande de matériau,
**caractérisé en ce que**
le rouleau d'orientation (12) est conçu pour se déplacer dans une première direction (x) par rapport au premier rouleau de passage (11) et au second rouleau de passage (13) pour régler un angle d'enveloppement de la bande de matériau sur le rouleau d'orientation (12), la première direction (x) étant perpendiculaire à une direction axiale du rouleau d'orientation (12),
le rouleau d'orientation (12) étant un rouleau d'adsorption conçu pour fournir une force d'adsorption à la bande de matériau.

2. Appareil de séchage selon la revendication 1, chacun de l'au moins un mécanisme d'orientation de bande de matériau (10) étant conçu pour changer la direction de déplacement de la bande de matériau d'une deuxième direction (y) à une troisième direction (z), la deuxième direction (y) et la troisième direction (z) étant perpendiculaires l'une à l'autre.

3. Appareil de séchage selon la revendication 2, un angle entre la première direction (x) et la deuxième direction (y) étant de 45°, et un angle entre la première direction (x) et la troisième direction (y) étant de 45°.

4. Appareil selon la revendication 1, l'appareil de séchage comprenant en outre :
un boîtier (20), l'au moins un mécanisme d'orientation de bande de matériau (10) étant situé à l'intérieur du boîtier (20).

5. Appareil de séchage selon la revendication 4, chacun de l'au moins un mécanisme d'orientation de bande de matériau (10) comprenant en outre :
un élément d'entraînement (14) conçu pour entraîner le rouleau d'orientation (12) pour qu'il se déplace dans la première direction (x).

6. Appareil selon la revendication 5, l'appareil de séchage comprenant en outre :
au moins une piste (30) disposée à l'intérieur du boîtier (20) et s'étendant dans la première direction (x) ; et
au moins un coulisseau (31) monté sur l'au moins une piste (30) et lié au rouleau d'orientation (12),
l'élément d'entraînement (14) étant utilisé pour entraîner le rouleau d'orientation (12) pour qu'il coulisse le long de l'au moins une piste (30).

7. Appareil de séchage selon la revendication 6, une partie de montage (300) étant disposée au niveau d'une extrémité de l'au moins une piste (30) ; et
l'élément d'entraînement (14) comprenant une vis de réglage, la vis de réglage s'étendant dans la première direction (x), la vis de réglage traversant et étant vissée sur la partie de montage (300), et une extrémité de la vis de réglage étant reliée à l'au moins un coulisseau (31).

8. Appareil de séchage selon la revendication 6, le rouleau d'orientation (12) comprenant un corps de rouleau (120) et un corps d'arbre (121), et le corps de rouleau (120) étant emmanché sur le corps d'arbre (121) de manière rotative ; et
l'au moins un coulisseau (31) étant relié au corps d'arbre (121),
de préférence, deux pistes (30) et deux coulisseaux (31) étant fournis, et les deux pistes (30) étant disposées à un intervalle dans une direction axiale du corps d'arbre (121) ; et
deux extrémités axialement opposées du corps d'arbre (121) coopérant avec les pistes (30) à travers les coulisseaux (31), respectivement.

9. Appareil de séchage selon la revendication 6, l'appareil de séchage comprenant en outre un capteur de déplacement (32) conçu pour détecter une position du rouleau d'orientation (12) sur la piste (30).

10. Appareil de séchage selon la revendication 1, une surface du rouleau d'adsorption étant pourvue d'une pluralité de trous d'air (1200), et les trous d'air (1200) étant conçus pour fournir une force d'adsorption.

11. Appareil de séchage selon la revendication 1, une pluralité de mécanismes d'orientation de bande de matériau (10) étant fournis pour changer la direction de déplacement de la bande de matériau plusieurs fois.

12. Appareil de séchage selon l'une quelconque des revendications 1 à 11, l'appareil de séchage comprenant en outre au moins une première partie de séchage (40) et au moins une seconde partie de séchage, l'au moins une première partie de séchage (40) et l'au moins une seconde partie de séchage (41) étant opposées et espacées l'une de l'autre pour former un espace à travers lequel passe la bande de matériau ; et
l'au moins une première partie de séchage (40) étant conçue pour sécher un côté de la bande de matériau dans le sens de l'épaisseur, et l'au moins une seconde partie de séchage (41) étant conçue pour sécher l'autre côté de la bande de matériau dans le sens de l'épaisseur.

13. Appareil de séchage selon la revendication 12, l'au moins une première partie de séchage (40) et/ou l'au moins une seconde partie de séchage (41) comprenant chacune une buse d'air (40a) ; et
la buse d'air (40a) étant conçue pour fournir un flux d'air.

14. Dispositif de fabrication de plaque d'électrode, comprenant :
un appareil d'application de revêtement conçu pour appliquer sur une surface d'une plaque d'électrode une bouillie ; et
l'appareil de séchage selon l'une quelconque des revendications 1 à 13, dans une direction de déplacement de la plaque d'électrode, l'appareil de séchage étant situé en aval de l'appareil d'application de revêtement pour sécher la bouillie sur la plaque d'électrode.

15. Procédé de séchage de plaque d'électrode, comprenant :
l'obtention d'une teneur en solide d'une plaque d'électrode ; et
le déplacement d'un rouleau d'orientation (12) dans l'appareil de séchage selon la revendication 1 dans une première direction (x) en fonction de la teneur en solide, pour régler un angle d'enveloppement de la plaque d'électrode sur le rouleau d'orientation (12), la première direction (x) étant perpendiculaire à une direction axiale du rouleau d'orientation (12),
le rouleau d'orientation (12) étant un rouleau d'adsorption conçu pour fournir une force d'adsorption pour la plaque d'électrode.
